# EUROPEAN PATENT SPECIFICATION

(11) **EP 4 296 127 B1**
(45) Date of publication and mention of the grant of the patent: **18.02.2026**
(21) Application number: 23178825.8
(22) Date of filing: 13.06.2023
(51) Int. Cl.: B60T 13/74, B60T 7/10, F16H 1/32, F16D 121/24, F16D 125/50

(54) **ELECTRIC PARKING BRAKE ACTUATOR**
ELEKTRISCHER FESTSTELLBREMSAKTUATOR
ACTIONNEUR DE FREIN DE STATIONNEMENT ÉLECTRIQUE

(30) Priority: 24.06.2022 IT 202200013414
(43) Date of publication of application: 27.12.2023
(73) Proprietor: FINAN.CO. S.r.l, 20871 Vimercate (MB) (IT)
(72) Inventor: BARBIERI, WALTER, 24040 FILAGO (BG) (IT)
(74) Representative: Dragotti & Associati S.P.A.

(56) References cited:
- CN-U- 206 054 596
- CN-U- 207 673 848
- CN-U- 210 290 722
- KR-B1- 101 041 553
- US-B2- 8 863 920

## Description

The present invention relates to an electric parking brake actuator.

The field of application refers to actuators of the parking brake that can be operated by means of an electric motor, also commonly called parking brakes, and are widely used in motor vehicles.

In general, parking brakes are operated by means of cables but to operate them the driver and/or the user must use a certain muscle power.

Conversely, brakes operated by means of an electric motor have the advantage of saving the driver this action or effort and moreover these brakes can be incorporated into the electrical-electronic controls found on modern motor vehicles.

As said, these parking brakes are commonly operated by means of an actuator, which has an electric motor associated with it. Their operation can consist in several steps or actions, and moreover the reduction unit can be produced by means of different gear technologies.

In this regard, gear assemblies are known that are conceived as belt gears, worm gears, cylindrical gears or planetary gears, etc.

Examples of these actuators are illustrated in the patent EP 2081806.

The assemblies developed to date are somewhat complex and at times their operation is not completely reliable. Moreover, they are formed of a large number of components, which leads to complex construction and related costs, assembly problems and at times a certain noisiness of the assembly.

Their assembly requires high precision for connection and meshing of the parts that are generally complex to produce and require greater attention to quality control, with an increase in the costs.

Moreover, the brake actuators are subject to increasing requirements in terms of resistance to shocks, vibrations, corrosion and high temperatures. In all operating conditions, the mechanical strength of the transmission should be as constant as possible to be able to provide reproducible clamping forces.

KR 101041553 relates to an electronic parking brake actuator that claims to improve the control properties of the actuator through fine adjustment of a transmission ratio. The electronic parking brake actuator comprises a housing, a motor, a reduction gear train and a gearbox. The housing is installed on one side of a housing of the calliper brake. A controller is provided for the motor. The reduction train is arranged between the motor and an output shaft connected to the operating unit of a calliper brake and comprises multiple reducers and a cycloidal gear assembly.

CN 210290722 relates to an electronic parking actuator. The device comprises a shell, and a motor and a transmission device that are arranged in the shell. The transmission device comprises an eccentric wheel with an eccentric shaft, a planetary gear and an output shaft assembly. The drive shaft is in transmission connection with an eccentric wheel, an eccentric shaft is inserted in the centre of a planetary gear and in transmission connection with the planetary gear. The planetary gear is meshed with an inner ring of the gear, the drive shaft operates the eccentric wheel to rotate, the eccentric shaft pushes the planetary gear to rotate along the drive shaft and the planetary gear rotates around the axis of the eccentric shaft and operates an output shaft at the output torque.

CN 206054596 concerns a vehicle parking system and relates in particular to an operating mechanism of an electronic parking brake based on a gear with a difference of a few teeth. The electronic parking brake operating mechanism is based on a few gears with a difference in the number of teeth. The lower end of the eccentric shaft passes through the planetary wheel for coupling of the bearing, and the engagement of the outer marginal gear of the planetary wheel connects the inner gear. Moreover, a floating disc to be positioned between planetary and output tray is provided.

CN 207673848 relates to an electronic parking power assembly provided with a small synchronisation wheel, a large synchronisation wheel and a reducer. An assembly of this type reduces the torque and the speed reduction; the transmission ratio is large, operation is regular and the bearing capacity is high and the duration is longer.

The general object of the present invention is to produce an electric parking brake actuator capable of solving the problems of the prior art indicated above in a very simple, inexpensive and particularly functional manner.

Another object of the present invention is to produce an electric parking brake actuator that is particularly simple, with number of parts reduced to a minimum and with limited manufacturing costs.

Another object of the present invention is to produce an electric parking brake actuator that is applicable in a simple manner and that operates with a certain regularity and reliability.

The aforesaid objects are achieved by an electric parking brake actuator produced according to the independent claim 1 and the subsequent dependent claim.

The structural and functional features of the present invention and its advantages in relation to the prior art will be clearer and more evident by examining the following description, with reference to the accompanying schematic drawings, which show an example of embodiment of the invention. In the drawings:
- Figs. 1 and 1A show an exploded perspective view in longitudinal direction that shows an embodiment of an electric parking brake actuator not according to the invention associated with an electric motor;
- Fig. 2 and 2A are top plan views only of the actuator in two different positions;
- Fig. 3 is a sectional view in a first position of the actuator along the line III-III of Fig. 2;
- Fig. 4 is a sectional view in a second position of the actuator along the line IV-IV of Fig. 2A;
- Fig. 5 is a section of the actuator along the line V-V of Fig. 3 and Fig. 5A shows an enlarged detail of this section of the actuator where the position of the teeth inside the cover and of the teeth of the gears can be seen;
- Figs. 6 and 7 are sections similar to those of Figs. 3 and 4 where the section has been plotted at the pins in the two different positions;
- Fig. 8A is a perspective view of an embodiment of the actuator according to the invention with parts in an exploded view;
- Figs. 8B, 8C, and 8D are views and sections of the embodiment of the actuator shown in Fig. 8A.

In the following description, to illustrate the figures identical reference numbers are used to indicate components with the same function. Moreover, for clarity of illustration, some reference numbers may not have been repeated in all the figures.

Indications such as "vertical" and "horizontal", "upper" and "lower" (in the absence of other indications) must be interpreted with reference to the assembly (or operating) conditions and referring to normal terminology in use in current language, where "vertical" indicates a direction substantially parallel to the direction of the gravitational force vector "g" and horizontal indicates a direction perpendicular thereto.

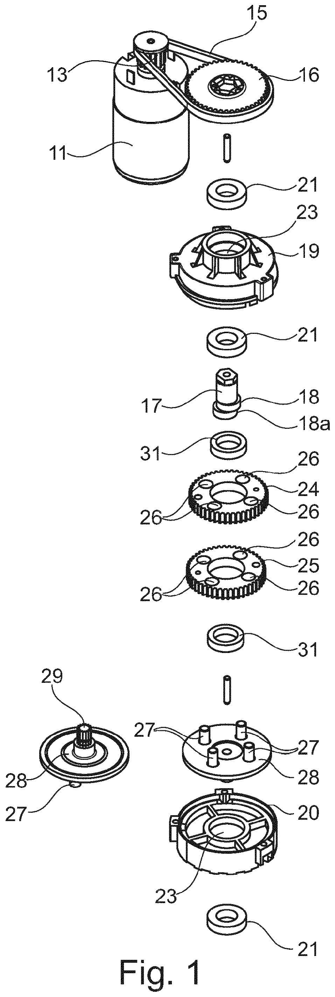

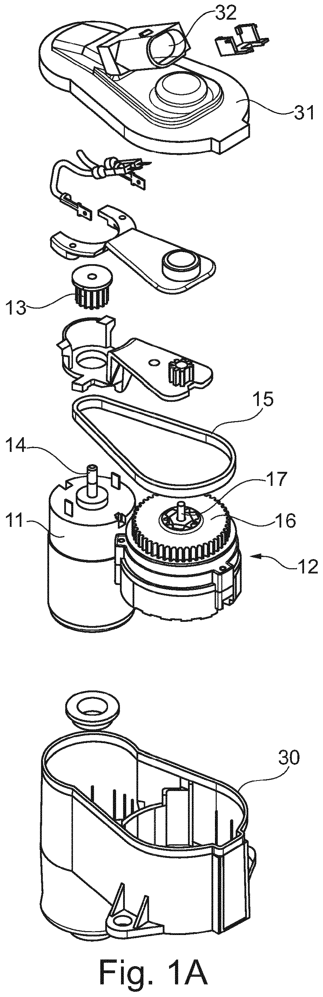

With reference to Figs. 1 and 1A, provided by way of nonlimiting example, there is shown an embodiment of an electric parking brake actuator not according to the invention in an application thereof.

In fact, there is shown an electric motor 11 that generally receives an impulse from a control unit of the vehicle and operates the actuator not according to the invention, indicated as a whole with 12.

More precisely, a motor pulley 13 can be observed, which is fitted onto a drive shaft 14 of the electric motor 11 and transfers the rotation motion by means of a timing belt 15 to a pulley 16 arranged on a shaft 17 at the inlet to the actuator 12. In this way, a reduction transmission ratio is created, which can, for example, be 1:3.

It must be noted that this shaft 17 is a shaft provided with a double eccentric formation or portion 18, 18a in the example illustrated, but in a simplified form it can also be with a simple eccentric formation. In a few words, this shaft 17 can be provided with at least one eccentric formation in order to function correctly.

It must then be noted that this actuator 12 is provided with an upper cover 19 and a lower cover 20 that contain the various parts of said actuator and that are provided with bearings or bushings 21 that allow regular guiding and eliminate frictions between the various components. The bearings 21 are located in holes 23 of the upper cover 19 and of the lower cover 20.

Said upper cover 19 and lower cover 20 are cup or bell shaped and the upper cover, on its inner surface with larger diameter, is provided with inner teeth 22. These inner teeth 22 allow guided rotation of gears 24 and 25 that interact respectively on the double eccentric formations or portions 18, 18a of the shaft 17.

The double eccentric shaft 17 receives motion from the pulley 16 and transfers it to the gears 24, 25 through the double eccentric formations or portions 18, 18a. In this case, these formations are two and opposite so as to distribute the lateral forces symmetrically.

This reduction unit together with the upper cover 19 provided with teeth 22, which closes it, allows guided rotation of the gears 24, 25 with a planetary motion.

Naturally, if the shaft 17 were to have only one eccentric formation 18 or 18a there would consequently only be space for one gear 24 or 25.

Naturally, the two gears 24 and 25 are also arranged on bearings 31 that guide them and eliminate frictions.

It must also be noted that, in the form illustrated, the body of the two gears 24 and 25 has four through holes 26 inside which four pins 27 are arranged extending from a disc formation 28 from which a shaft extension 29 extends downwards towards the lower cover 20, passing therein. The disc formation 28 and shaft extension 29 produce an output shaft of the actuator.

The disc formation 28 is housed inside the lower cover 20 and rotates centred therein.

In fact, the four pins 27 inserted in the through holes 26 of the gears 24 and 25 "drive" them, i.e., cause them to rotate with a planetary motion on the inner teeth 22 of the upper cover 19 due to their arrangement on the double eccentric formations or portions 18, 18a of the shaft 17.

In fact, through the motion received from the double eccentric shaft 17 with planetary motion, these gears drive the four pins 27 arranged on the disc formation 28 with shaft extension 29 that, as said, produce the output shaft of the actuator.

It must be noted how, by means of the four pins 27, this output shaft is driven by the gears 24, 25 in a rotational motion that thus generates the final reduction, which can, for example, have a reduction ratio of 1:55.

Fig. 1A shows the positioning of this actuator 12 together with the electric motor 11 inside a casing 30 and 31 in two halves, of different shape and size, also illustrating an inlet opening 32 positioned in the upper half 31 through which an electric connector of the power system of the motor passes. The connector can also be located in the lower part.

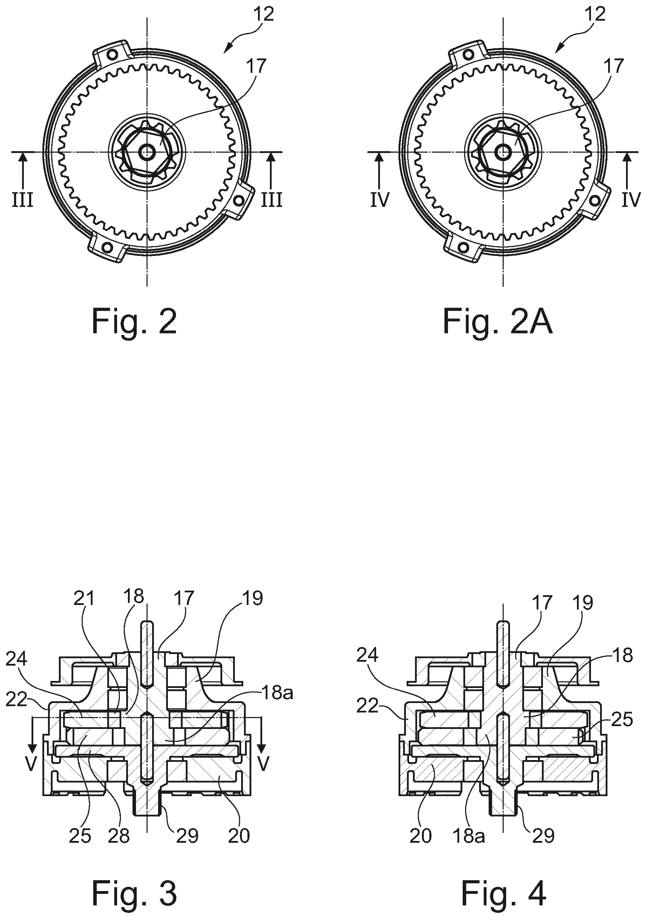

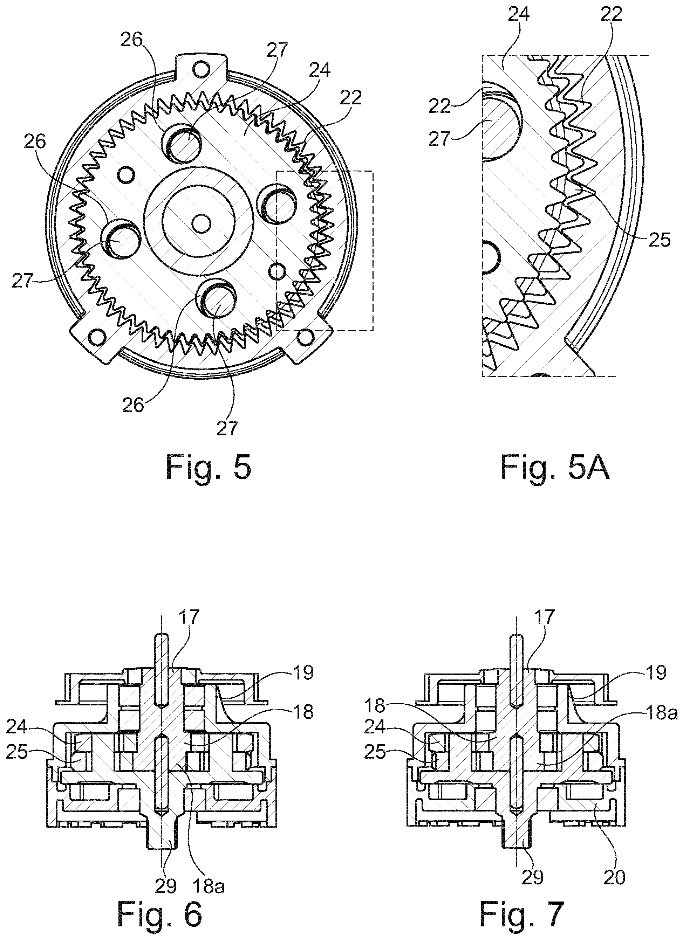

Figs. 2-7 show plan and cross-sectional views along different lines, in which the contacts between the gears 24, 25, the inner teeth 22 of the upper cover 19, and between the pins 27 and the holes 26 obtained in the body of the gears 24, 25 are highlighted.

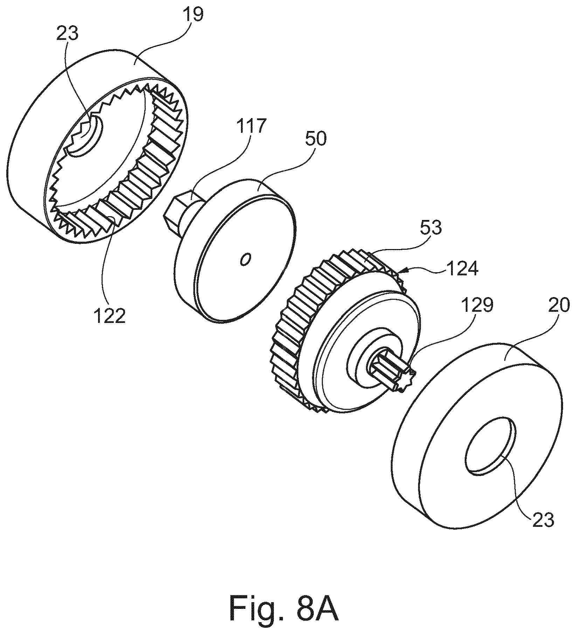

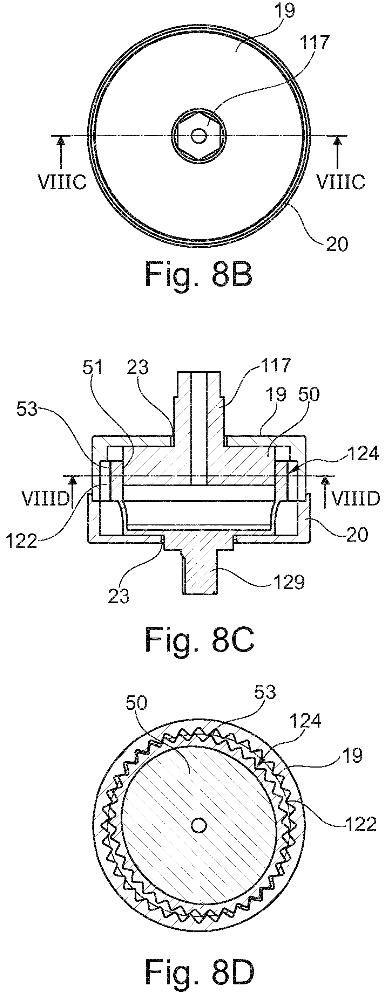

Figs. 8A, 8B, 8C and 8D are an exploded perspective view and sections of an embodiment of an actuator according to the present invention, where the same reference numbers are used for the same elements or these reference numbers are preceded by the index "1" for functionally equivalent elements.

Once again, there is provided an upper cover 19 and a lower cover 20 containing the elements of the actuator.

More precisely, there is provided a pin 117, extending integral from an elliptical shaped disc formation 50 that passes through a central hole 23 of the upper cover 19. This rigid elliptical disc formation 50 is positioned in a recessed deformable elliptical housing 51 obtained in a gear formation 124. In this way, also in this example an eccentric formation is produced, similar to the one of the first example described above.

This gear 124 is formed of a deformable upper part with teeth 53 and recess 51 and of a lower part with a rigid shaft 129. Naturally, the lower part with shaft extension 129 passes through a central hole 23 obtained in the lower cover 20.

The rigid teeth 122 of the cover 19 engage with the deformable teeth 53 of the gear 124 (Fig. 8D).

This pin 117 carrying the elliptical disc formation 50 by rotating produces an eccentric rotational movement of the deformable teeth 53. This rotation causes the teeth 53 of the gear 124 to engage, i.e., roll on the teeth 122 inside the lower cover 19 producing a planetary motion.

Since the output shaft extension 129 is guided in the hole 23 of the lower cover 20, the oscillating motion is transformed into rotary motion at the output.

Also in this case, the same operation shown in the first embodiment is achieved.

Both embodiments provide an electric parking brake actuator that is capable of solving the aforesaid problems of the prior art in a very simple, inexpensive and particularly functional manner.

Moreover, an electric parking brake actuator according to the present invention is particularly simple, with number of parts reduced to a minimum and with limited manufacturing costs. Furthermore, an electric parking brake actuator according to the present invention is simple to apply and operates with a certain regularity and reliability.

The object mentioned in the preamble of the description is thus achieved.

The scope of protection of the present invention is defined by the appended claims.

## Claims

1. Electric parking brake actuator, wherein the actuator comprises an electric motor (11) and a planetary gearbox assembly (12) connected downstream of the electric motor (11), wherein the planetary gearbox assembly (12) collaborates with an upper cover (19) and with a lower cover (20), where the upper cover is provided internally with inner peripheral teeth (122) that interact with a gear (124), and wherein a shaft in the form of a rigid pin (117) that rotates said gear (124) is provided with an eccentric formation (50, 51), **characterised in that** said eccentric formation (50, 51) comprises the rigid pin (117) extending integral in an elliptical shaped rigid disc formation (50) positioned in a recessed deformable elliptical housing (51) obtained in said gear (124) provided with deformable teeth (53) that engage on said rigid inner teeth (122) of said upper cover (19).

2. Actuator according to claim 1, **characterised in that** said gear (124) extends downward in a rigid shaft extension (129) that passes through a central hole (23) obtained in the lower cover (20).

## Patentansprüche

1. Elektrischer Feststellbremsenaktuator, wobei der Aktuator einen Elektromotor (11) und eine dem Elektromotor (11) nachgeschaltete Planetengetriebebaugruppe (12) umfasst, wobei die Planetengetriebebaugruppe (12) mit einer oberen Abdeckung (19) und einer unteren Abdeckung (20) zusammenwirkt, wobei die obere Abdeckung innen mit einer inneren Umfangsverzahnung (122) versehen ist, die mit einem Getriebe (124) interagiert, und wobei eine Welle in Form eines starren Bolzens (117), der das Getriebe (124) dreht, mit einer exzentrischen Ausbildung (50, 51) versehen ist, **dadurch gekennzeichnet, dass** die exzentrische Ausbildung (50, 51) den starren Bolzen (117) umfasst, der sich einstückig in eine elliptisch geformte starre Scheibenausbildung (50) erstreckt, die in einem vertieften verformbaren elliptischen Gehäuse (51) positioniert ist, das in dem Getriebe (124) erhalten wird, das mit verformbaren Zähnen (53) versehen ist, die in die starren inneren Zähne (122) der oberen Abdeckung (19) eingreifen.

2. Aktuator nach Anspruch 1, **dadurch gekennzeichnet, dass** sich das Getriebe (124) in einer starren Wellenverlängerung (129) nach unten erstreckt, die durch ein in der unteren Abdeckung (20) erhaltenes zentrales Loch (23) verläuft.

## Revendications

1. Actionneur de frein de stationnement électrique, dans lequel l'actionneur comprend un moteur électrique (11) et un ensemble de réducteur planétaire (12) relié en aval du moteur électrique (11), dans lequel l'ensemble de réducteur planétaire (12) coopère avec un couvercle supérieur (19) et un couvercle inférieur (20), où le couvercle supérieur est pourvu, à l'intérieur, de dents périphériques internes (122) qui interagissent avec un pignon (124), et dans lequel un arbre sous la forme d'une goupille rigide (117) qui entraîne en rotation ledit pignon (124) est pourvu d'une formation excentrée (50, 51), **caractérisé en ce que** ladite formation excentrée (50, 51) comprend la goupille rigide (117) s'étendant de manière solidaire dans une formation rigide en forme de disque elliptique (50) positionnée dans un logement elliptique déformable encastré (51) ménagé dans ledit pignon (124) pourvu de dents déformables (53) qui viennent en prise avec lesdites dents internes rigides (122) dudit couvercle supérieur (19).

2. Actionneur selon la revendication 1, **caractérisé en ce que** ledit pignon (124) s'étend vers le bas en une extension d'arbre rigide (129) qui traverse un trou central (23) ménagé dans le couvercle inférieur (20).
